# EUROPÄISCHE PATENTANMELDUNG

(11) **EP 1 073 230 A1**
(43) Veröffentlichungstag der Anmeldung: **31.01.2001**
(21) Anmeldenummer: 99113240.8
(22) Anmeldetag: 06.07.1999
(51) Int. Cl.: H04L 1/22, H04L 29/14

(54) **Verfahren zum Ersatzschalten von Übertragungseinrichtungen bei paketorientierter Übertragung**

(71) Anmelder: SIEMENS AKTIENGESELLSCHAFT, 80333 München (DE)
(72) Erfinder: Charzinski, Joachim, 85764 Oberschleissheim (DE)

(57) **Zusammenfassung**

Beim Stand der Technik werden Informationen über redundante Verbindungsleitungen übertragen. Dieses Konzept kann nicht ohne weiteres auf die Übertragung von IP-Paketen angewandt werden. Erfindungsgemäß wird vorgesehen, die jedem IP-Paket im TOS-Feld mitgegebene Priorisierungsinformationzu zu verwenden, um das betreffende IP-Paket entweder auf die aktive bzw. die redundante Verbindungsleitung zu leiten. Im Falle einer Störung wird dann auf die redundante Verbindungsleitung umgeschaltet, wo die hoch priorisierten IP-Pakete die niedriger priorisierten IP-Pakete verdrängen.

## Beschreibung

Die Erfindung betrifft ein Verfahren gemäß dem Oberbegriff von Patentanspruch 1.

Um Informationen zwischen einer sendenden und empfangenden Einrichtung übertragen zu können, werden beim Stand der Technik gedoppelte Übertragungseinrichtungen vorgesehen. Diese sind in der Regel als Verbindungsleitungen ausgebildet. Die Informationen werden dabei in der Regel über lediglich eine dieser Verbindungsleitungen (aktive Verbindungsleitung) übertragen, während die verbleibende Verbindungsleitung als redundante Verbindungsleitung angeordnet ist. Fällt die aktive Verbindungsleitung aus, so werden die Informationen über die redundante Verbindungsleitung übertragen. Mit dieser Vorgehensweise ist damit sichergestellt, daß auch bei Ausfall einer Verbindungsleitung die Informationen sicher übertragen werden können.

Dieses allgemeine Konzept kommt auch beim Transport von paketorientiertem Verkehr zur Geltung. In der Regel wird jedoch über die redundant angeordnete Verbindungsleitung keinerlei oder nur wenig Verkehr übertragen, damit im Ersatzschaltefall jederzeit verlustfrei umgeschaltet werden kann. Damit liegt aber die Übertragungskapazität auf der redundant angeordneten Verbindungsleitung mehr oder weniger brach. Insbesondere für Pakete, die nach einem Internet Protocol übertragen werden (IP-Pakete), ist eine solche Situation zu vermeiden.

Der Erfindung liegt die Aufgabe zugrunde, einen Weg aufzuzeigen, wie auch bei IP-Verkehr eine Redundanz auf Übertragungseinrichtungen effizient gestaltet werden kann, ohne Einschränkungen in der Übertragungskapazität hinnehmen zu müssen.

Die Erfindung wird ausgehend vom Oberbegriff von Patentanspruch 1 durch die im kennzeichnenden Teil angegebenen Merkmale gelöst.

Vorteilhaft an der Erfindung ist insbesondere das Verwenden einer Priorisierungsinformation im TOS-Feld eines Paketes. Damit ist der Vorteil verbunden, daß höher priorisierte Pakete der aktiven Verbindungsleitung und niedriger priorisierte Pakete der redundanden Verbindungsleitung zugeführt werden. Im Ersatzschaltefall werden die höher priorisierten Pakete über die redundande Verbindungsleitung übertragen, indem sie die niedriger priorisierten Pakete verdrängen. Damit ist der Vorteil verbunden, daß jederzeit eine Redundanz gegeben ist und die Übertragungskapazität auf der redundanden Verbindungsleitung im fehlerfreien Betrieb voll genutzt werden kann.

Vorteilhafte Weiterbildungen der Erfindung sind in den Unteransprüchen angegeben.

Die Erfindung wird im folgenden anhand eines Ausführungsbeispiels näher erläutert.

Es zeigen
- FIG 1: eine starre Zuordnung des IP-Verkehrs auf die Verbindungsleitungen nach Maßgabe der TOS-Bits
- FIG 2: eine adaptive Zuordnung des IP-Verkehrs

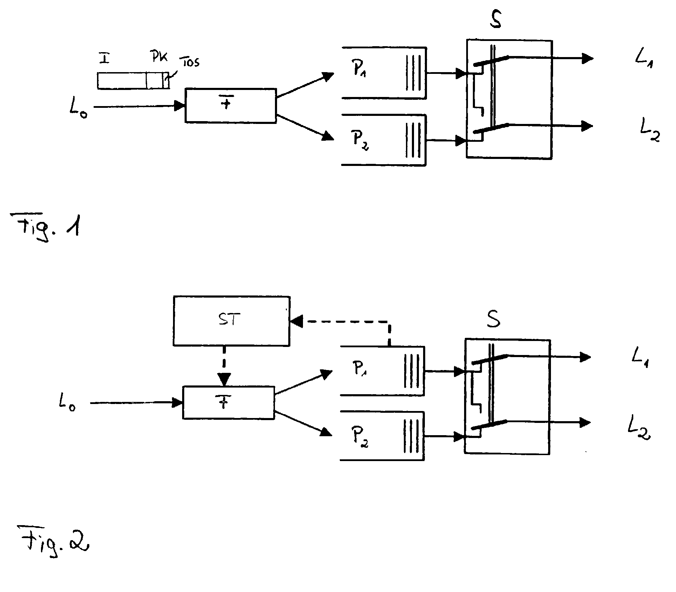

In FIG 1 ist eine Konfiguration aufgezeigt, auf der das erfindungsgemäße Verfahrens zum Ablauf gelangt. Demgemäß ist eine Verbindungsleitung L₀ offenbart, über die Informationen in Paketen übertragen werden. Gemäß vorliegendem Ausführungsbeispiel sind die Pakete als Pakete ausgebildet, die nach einem Internet Protocol übertragen werden (IP-Pakete). Die IP-Pakete werden über die Verbindungsleitung L₀ einer Filtereinrichtung F zugeführt. Hier wird eine Auswahl anhand einer (später noch genauer zu spezifizierenden) Markierung darüber getroffen, welcher der nachfolgenden Verbindungsleitungen L₁, L₂ das betreffende IP-Paket zugeführt werden soll. Ist die Auswahl erfolgt, so wird das betreffende IP-Paket zunächst in einen der Verbindungsleitung zugeordneten Pufferspeicher P₁ bzw. P₂ eingeschrieben. Den Pufferspeichern P₁ und P₂ ist eine Schaltvorrichtung S zugeordnet, über die die IP-Pakete den Verbindungsleitungen L₁,L₂ zugeführt werden. Gemäß vorliegendem Ausführungsbeispiel soll die Verbindungsleitung L₁ die aktive und die Verbindungsleitung L₂ die redundante Verbindungsleitung sein.

Die Schaltvorrichtung S wird von einer in Fig. 1 nicht näher aufgezeigten Steuereinrichtung angesteuert. Gemäß vorliegendem Ausführungsbeispiel ist die Schaltvorrichtung S derart gestellt, daß die im oberen Pufferspeicher P₁ gespeicherten IP-Pakete der Verbindungsleitung L₁ und die im unteren Pufferspeicher P₂ gespeicherten IP-Pakete der Verbindungsleitung L₂ zugeführt werden. Fällt nun die aktive Verbindungsleitung L₁ aus, so wird die Schaltvorrichtung S derart angesteuert, daß die Verbindungen des Pufferspeichers P₁ mit der Verbindungsleitung L₁ sowie des Pufferspeichers P₂ mit der Verbindungsleitung L₂ getrennt werden und anstelle dessen eine Verbindung zwischen dem Pufferspeicher P₁ und der Verbindungsleitung L₂ hergestellt wird. Dies bedeutet, daß die im Pufferspeicher P₁ gespeicherten IP-Pakete nun über die Verbindungsleitung L₂ übertragen werden. Die im Pufferspeicher P₂ gespeicherten IP-Pakete werden verworfen.

Die IP-Pakete weisen einen Informationsteil I und einen Paketkopf PK auf. Der Paketkopf PK dient u.a. der Aufnahme der Zieladresse sowie von Steuerinformationen. Als Teil dieser Steuerinformationen ist ein Feld TOS bereitgestellt, das eine Breite von 8 Bit aufweist. Dieses Feld wird beim Stand der Technik im Rahmen des "Differentiated Services" Konzeptes dazu genutzt, um IP-Paketen eine Priorisierungsinformation mitzugeben. Im Überlastfall werden dann z. B. aufgrund dieser Information die niedriger priorisierten IP-Pakete verworfen.

Erfindungsgemäß wird nun vorgesehen, durch Auswertung des Feldes TOS eine Aufteilung der einzelne IP-Pakete auf die Pufferspeicher P₁, P₂ vorzunehmen. Die Auswertung erfolgt in der Filtereinrichtung F und wird anhand eines vorgebbaren Schwellenwertes durchgeführt. Dies bedeutet, daß, falls der im Feld TOS gespeicherte Wert größer als dieser vorgegebene Schwellenwert ist, dieses IP-Paket als höher priorisiert anzusehen ist als solche IP-Pakete, deren Wert unterhalb dieses Schwellenwertes liegt.

Als Resultat der Auswertung werden somit höher priorisierte von nieder priorisierten IP-Paketen unterschieden. Die höher priorisierten IP-Pakete werden über die Verbindungsleitung L₁ geführt, während die nieder priorisierten IP-Pakete der Verbindungsleitung L₂ zugeführt werden. Damit ist dann auch indirekt eine Priorisierung der Verbindungsleitungen L₁, L₂ gegeben. Damit werden im Fehlerfall lediglich solche IP-Pakete weitergeleitet, die als höher priorisiert anzusehen sind. Die nieder prioren IP-Pakete werden verworfen.

Die Aufteilung der IP-Pakete auf die beiden Verbindungsleitungen L₁, L₂ erfolgt in Fig. 1 anhand einer starren Zuordnung. Eine Weiterbildung des Verfahrens ist Fig. 2 entnehmbar. Demgemäß wird hier ein adaptives Verfahren vorgesehen. So werden hier gerade so viele der höher priorisierten IP-Pakete der Verbindungsleitung L₁ zugeführt, daß auf dieser eine vorgegebene Zielauslastung erreicht wird. Die geringer priorisierten IP-Pakete werden auf die Verbindungsleitung L₂ gegeben. Sie gehen dann im Falle der Umschaltung aufgrund eines Fehlers in der Verbindungsleitung L₁ verloren.

Zur Steuerung dieser Vorgänge ist die in Fig. 2 mit ST bezeichnete Einrichtung vorgesehen. Hier wird der Schwellenwert nach Maßgabe der Auslastung der Verbindungsleitung L₁ beispielsweise anhand des Füllstandes der entsprechenden Warteschlange eingestellt.

## Patentansprüche

1. Verfahren zum Ersatzschalten von Übertragungseinrichtungen bei paketorientierter Übertragung,
mit einer Mehrzahl von unterschiedlichen Verbindungen zugehörigen Paketen, die über eine Übertragungseinrichtung (L₁) sowie gegebenenfalls eine dazu redundant angeordnete Übertragungseinrichtung (L₂) übertragen werden, wobei jedem Paket in einem Teil des Paketkopfes (TOS) eine Priorisierungsinformation mitgegeben wird,
**dadurch gekennzeichnet,**
daß nach Maßgabe der Priorisierungsinformation das betreffende Paket entweder über die Übertragungseinrichtung (L₁) oder die dazu redundant angeordnete Übertragungseinrichtung (L₂) geleitet wird, und
daß bei Störungen der Übertragungseinrichtung (L₁) die darüber zu leitenden Pakete über die redundant angeordnete Übertragungseinrichtung (L₂) geleitet werden.

2. Verfahren nach Anspruch 1,
**dadurch gekennzeichnet,**
daß die Pakete als Pakete ausgebildet sind, die nach einem Internet Protocol übertragen werden (IP-Pakete).

3. Verfahren nach Anspruch 1, 2,
**dadurch gekennzeichnet,**
daß der Teil des Paketkopfes, in dem die Priorisierungsinformation mitgegeben wird, das im Rahmen des Differentiated Services Konzeptes definierte TOS-Feld ist.

4. Verfahren nach Anspruch 1 bis 3,
**dadurch gekennzeichnet,**
daß über die redundant angeordnete Übertragungseinrichtung (L₂) lediglich die niedriger priorisierten Pakete geleitet werden.

5. Verfahren nach einem der vorstehenden Ansprüche,
**dadurch gekennzeichnet,**
daß die niedriger priorisierten Pakete im Ersatzschaltefall verworfen werden.

6. Verfahren nach einem der vorstehenden Ansprüche,
**dadurch gekennzeichnet,**
daß die Priorisierung nach Maßgabe der Auslastung der Übertragungseinrichtung (L₁) veränderbar ist.

7. Verfahren nach einem der vorstehenden Ansprüche,
**dadurch gekennzeichnet,**
daß die Übertragungseinrichtungen als Verbindungsleitungen (L₁, L₂) ausgebildet sind.
